(19) Europäisches Patentamt
European Patent Office
Office européen des brevets

(11) **EP 0 785 503 B1**

(12) **FASCICULE DE BREVET EUROPEEN**

(45) Date de publication et mention
de la délivrance du brevet:
**01.07.1998 Bulletin 1998/27**

(51) Int Cl.⁶: **G06F 7/72**

(21) Numéro de dépôt: **96470024.9**

(22) Date de dépôt: **11.12.1996**

(54) **Procédé de production d'un paramètre de correction d'erreur associé à la mise en oeuvre d'opérations modulaires selon la méthode de Montgomery**

Verfahren zum Erzeugen eines Fehlerkorrekturparameters bezüglich der Verwendung von modularen Operationen nach der Montgomery-Methode

Method of producing an error correcting parameter associated with the implementation of modular operations according to the Montgomery method

(84) Etats contractants désignés:
**DE FR GB IT**

(30) Priorité: **18.01.1996 FR 9600691**

(43) Date de publication de la demande:
**23.07.1997 Bulletin 1997/30**

(73) Titulaire: **SGS-THOMSON MICROELECTRONICS S.A.**
**94250 Gentilly (FR)**

(72) Inventeur: **Monier, Guy**
**57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
**EP-A- 0 601 907**      **EP-A- 0 712 070**

• **IEEE JOURNAL ON SELECTED AREAS IN COMMUNICATIONS, vol. 11, no. 5, 1 Juin 1993, pages 761-769, XP000399844 ARAZI B: "DOUBLE-PRECISION MODULAR MULTIPLICATION BASED ON A SINGLE-PRECISION MODULAR MULTIPLIER AND A STANDARD CPU"**

## Description

L'invention concerne un procédé de production d'un paramètre de correction d'erreur associé à la mise en oeuvre d'opération modulaire selon la méthode de Montgomery. Cette méthode permet d'effectuer des calculs modulaires dans un corps fini $GF(2^n)$ (corps de Gallois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans un document D1 correspondant à la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des opérations modulaires, en utilisant la méthode de Montgomery. D'autres renseignements sur ce coprocesseur se trouve dans la demande de brevet européen EP-A-0 601 907 que l'on appellera document D2 par la suite, et est illustré figure 1 (cette figure correspondant à la figure 2 de la demande de brevet européen citée), ce circuit dédié faisant l'objet de cette demande.

L'opération de base des calculs modulaires selon la méthode de Montgomery, dite $P_{field}$, consiste, à partir de trois données binaires A (multiplicande), B (multiplieur) et N (modulo), codées sur un nombre entier n de bits, à produire une donnée binaire notée $P(A, B)_N$ codée sur n bits, telle que $P(A, B)_N = A * B * I \bmod N$, I étant une erreur due à la méthode de Montgomery. La méthode de Montgomery utilise une base de calcul de k bits et décompose les mots de n bits en m mots de k bits tels que $m * k \geq n > (m - 1) * k$. La méthode de Montgomery se déroule ainsi, i étant un indice variant de 0 à m - 1:

$$X = S_i + A_i * B,$$

$$Y_0 = (X * J_0) \bmod 2^k,$$

$$Z = X + (N * Y_0)$$

$$S_{i+1} = Z \backslash 2^k, \backslash$$

étant une division entière,

si $S_{i+1}$ est supérieur à N alors on soustrait N à $S_{i+1}$ à la prochaine itération,

$A_i$ correspondant à un mot de k bits de la décomposition de A,

$S_i$ correspondant à un résultat actualisé de l'opération $P_{field}$ et $S_m = P(A, B)_N = A * B * I \bmod N$.

Pour réaliser une multiplication modulaire $A * B \bmod N$, il est nécessaire de supprimer l'erreur I. Cette erreur I est connue et elle vaut $2^{-m*k}$. Pour la supprimer, on réalise une deuxième opération $P_{field}$: $P(S_m, H)_N$, H étant une donnée binaire codée sur m mots de k bits et valant $2^{2m*k} \bmod N$.

La production d'un paramètre H se fait classiquement par soustractions successives à l'aide d'un coprocesseur de calcul tel que celui décrit dans le document D2. Un premier problème est que le calcul de H à l'aide d'un coprocesseur nécessite que le dit processeur puisse réaliser des opérations sur des mots de $m * k$ bits.

Si on désire réaliser des opérations modulaires utilisant des opérandes d'une taille supérieure à ce que gère le coprocesseur, on utilisera un processeur classique 8, 16 ou 32 bits, une mémoire et un coprocesseur, le coprocesseur servant à effectuer les multiplications. Il n'est alors pas possible de réaliser le calcul de H dans le coprocesseur. Le calcul de H doit alors se faire dans le processeur par soustractions successives. Les processeur classiques n'étant pas optimisés pour ce genre d'opération, ils nécessitent un espace mémoire relativement important pour stocker le code nécessaire et ils réalisent les opérations sur des grands nombres beaucoup plus lentement qu'un coprocesseur dédié. La production d'un tel paramètre n'est donc pas optimisé.

L'invention propose un procédé de calcul de puissance de deux qui s'applique à tous les cas possibles de calcul de H. Ce procédé présente l'avantage de rendre le calcul de H beaucoup plus rapide pour des grands nombres.

L'invention a donc pour objet un procédé de production d'un paramètre de correction d'erreur intervenant dans la réalisation de calcul modulaires par des circuits intégrés utilisant la méthode de Mongomery, H étant le paramètre de correction d'erreur tel que $H = 2^{(m+m'')*k} \bmod N$, N étant un entier codé sur $m * k$ bits et ayant son bit de poids le plus faible non nul, $m'' * k$ étant codé sur p bits, et H(i) étant une valeur actualisée de H telle que $H(p-1) = H = 2^{(m+m'')*k} \bmod N$, le dit procédé utilisant un coprocesseur d'arithmétique modulaire, un processeur de traitement et une mémoire, le procédé comportant les étapes suivantes:

- production d'une donnée binaire valant $2^{m*k+1} \bmod N$, dite H(0) et stockage de cette donnée dans la mémoire et/ou dans un registre du coprocesseur;

- réalisation d'une boucle indexée par un indice i, i variant de 1 à p - 1, et qui comporte les étapes suivantes:

-- mise en oeuvre d'une opération $P_{field}(H(i-1), H(i-1))$ en utlisant un multiplieur du coprocesseur, et stockage du résultat noté R(i) dans la mémoire ou dans le registre du coprocesseur,

-- si le bit de poids $2^{p-i-1}$ de la donnée m * k est égal à 1 alors réalisation d'une opération $P_{field}$ (H(i-1), H(0)) en utlisant un multiplieur du coprocesseur, et stockage du résultat H(i) dans la mémoire ou dans le registre du coprocesseur.

Les opérations $P_{field}$ apparaissent comme étant des opérations qui prennent énormément de temps pour les grands nombres. Cependant il est possible d'avoir un coprocesseur ayant un fréquence d'horloge interne supérieure à celle d'un processeur de traitement classique permettant de faire gagner du temps sur les opérations $P_{field}$. De ce fait, il est préférable dans certains cas d'utiliser le procédé de l'invention pour le calcul de H. En effet pour un nombre codé sur m * k bits, il faudra exécuter au maximum m" * k soustractions avec l'art antérieur ou $2 * \log_2(m" * k)$ opération $P_{field}$ avec l'invention. Plus m" * k est grand, plus il est intéressant d'utiliser l'invention.

Plusieurs cas sont possibles pour le calcul de H(0), ainsi on effectue au choix soit un complément à 2 de N soit une soustraction de N à 0, 0 étant codé sur m * k bits, pour obtenir $2^{m*k} \bmod N$. Puis on décale de une unité vers la gauche et on effectue une soustraction pour obtenir H(0). De plus si q bits de poids fort de N sont égaux à 0, il faudra décaler N vers la gauche du nombre de q bits, puis effectuer q + 1 soustractions successives combinées à q + 1 décalages à gauche de un bit, puis décaler vers la droite de q bits de poids fort égaux à 0. Les soustractions peuvent s'effectuer dans le processeur ou le coprocesseur suivant la taille des nombres à considérer.

Une amélioration de l'invention consiste à décomposer k * m" en deux entiers u et v tel que u * v = m" * k, v étant codé sur w bits, le procédé devenant celui de la revendication 6.

Cette amélioration sert à diminuer le nombre d'itérations utilisant des opérations $P_{field}$ au profit de quelques soustractions successives moins couteuses en temps de calcul.

L'invention sera mieux comprise, et d'autres avantages apparaîtront dans la description ci-après d'un mode de réalisation préféré, donné à titre indicatif et nullement limitatif, à lire conjointement aux dessins annexés, dans lesquels:

- la figure 1 représente schématiquement un coprocesseur selon l'art antérieur permettant de mettre en oeuvre des opérations modulaires sur des mots de m * k bits,
- la figure 2 représente schématiquement un circuit de cryptage mettant en oeuvre des opérations modulaires sur des mots de tailles m' * k' bits,

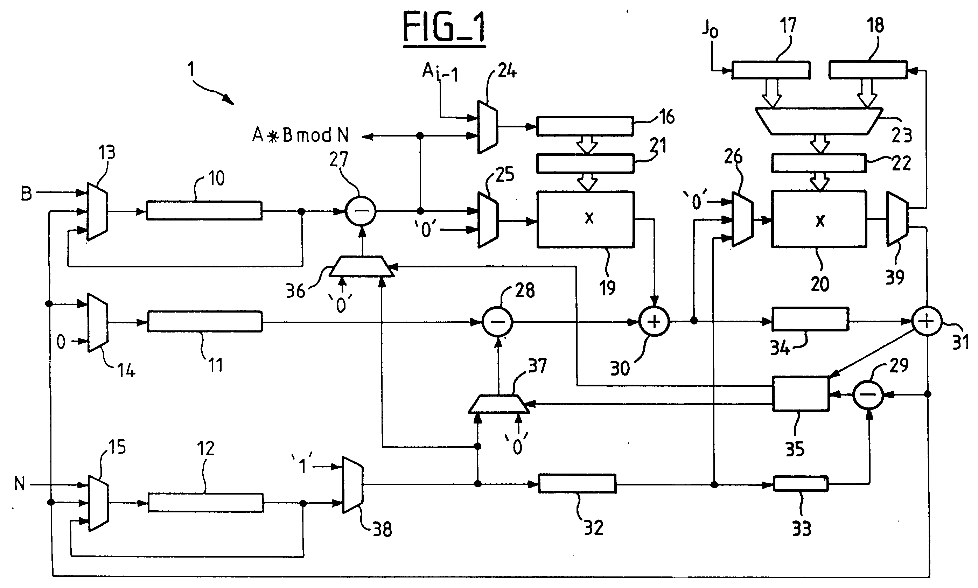

La figure 1 représente un coprocesseur 1 de traitement d'opérations modulaires.

Il comprend :

- trois registres à décalage 10, 11 et 12 à entrée et sortie série. Ces registres comportent chacun un même nombre n de cellules, avec n = m * k. Ces registres pourront être subdivisables, par exemple en registres de n/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions desdits registres 10, 11 et 12 si celles ci existent.
- trois registres 16, 17 et 18 comportant chacun k cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.
- des multiplexeurs 24, 25, 37, 26, 36 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit 35 de stockage de résultat de comparaison.

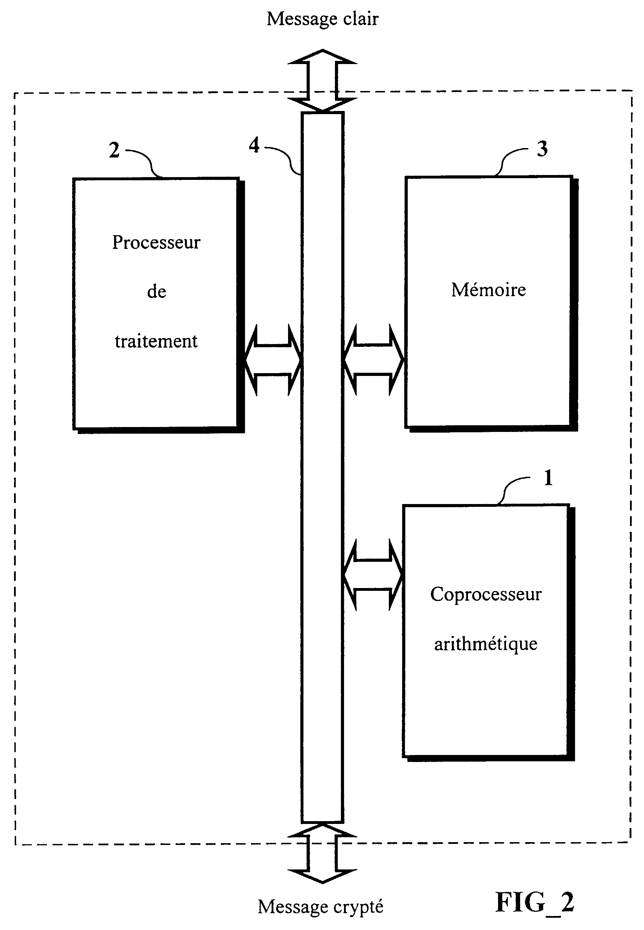

Pour plus de détails, on pourra se reporter au document D2, en particulier aux figures 2 et 3, et aux extraits de la description s'y rapportant : page 15, ligne 54 à page 16, ligne 13, et page 17, ligne 50 à page 18, ligne 55.

Le coprocesseur 1 peut effectuer des calculs d'opération modulaires sur des nombres de m * k bits, comme décrit dans le document D2. Cependant, il est également possible de lui faire réaliser des multiplications A * B classiques sur des nombres de tailles allant jusqu'à m * k bits en procédant ainsi:

E1: initialisation:

- chargement dans le registre 17 de k fois 0,
- chargement dans le registre 10 de B,
- chargement dans les registres 11 et 12 de m * k fois 0,
- chargement dans le registre 16 du mot $A_0$ de k bits de A,

- initialisation du multiplieur 19,
- initialisation des circuits d'addition et des circuit de soustractions 28, 30, 31;

E2: réalisation d'une boucle indexée par un indice i, i variant de 1 à m:

- chargement du contenu du registre 16 dans la bascule 21,
- réalisation de la multiplication de $A_{i-1}$ par B et addition du contenu du registre 11 avec le produit par décalage à droite simultané des registres 10 et 11,
- stockage des k bits de poids faible du résultat dans le registre 12 par décalage à droite de k bits,
- stockage des m * k bits de poids fort du résultat dans le registre 11,
- chargement du mot $A_i$ dans le registre 16 pendant le déroulement des autres étapes.

A la fin d'un tel procédé, on a donc le poids faible du résultat dans le registre 12 et le poids fort du résultat dans le registre 11. Il apparait à l'homme du métier qu'il est nécessaire de rajouter une borne de sortie sur le registre 12 pour pouvoir sortir le poids faible du résultat.

Il apparait également à l'homme de métier qu'avec ce même procédé, on peut effectuer la multiplication d'un nombre B codé sur m * k bits par un nombre A codé sur m'' * k bits avec m'' un entier quelconque. Pour cela on exécute la boucle de l'étape E2 avec un indice i variant de 1 à m''. Toutes les m itérations, on sort le contenu du registre 12 par une borne de sortie.

Il est également possible de réaliser le carré de nombres codés sur m * k bits à l'aide du registre 10 sans chargement extérieur du registre 16. En effet, il suffit de charger dans le registre 16 les k bits nécessaires à l'itération suivante pendant l'itération en cours au moment où lesdits bits sortent du registre 10.

Pour pouvoir réaliser des calculs modulaires selon la méthode de Montgomery, on utilise la structure de la figure 2. Cette figure 2 représentant un circuit de cryptage comportant un coprocesseur arithmétique 1, un processeur de traitement 2, une mémoire 3 et un bus de communication 4 qui permet de relier les éléments précités 1, 2 et 3 ensemble. La mémoire a pour rôle de stocker des données binaires de différents formats. Le processeur 2 de traitement a pour rôle de gérer les échanges d'informations entre la mémoire 3, le coprocesseur 1 et l'extérieur de ce circuit de cryptage. Le coprocesseur 1 peut être par exemple le même que celui de la figure 1 après avoir subit quelques légères modifications pour réaliser les multiplications simples décrites précédemment.

Avec le circuit de cryptage de la figure 2, il est possible de réaliser des opérations sur des mots codés sur m' ∗ k' bits, k' étant égal à j∗ k, j pouvant varier de 1 à m, et m' étant un entier quelconque qui subit une limitation due à la taille de la mémoire, taille que se fixera l'homme du métier.

Dans un exemple, l'algorithme utilisé pour le calcul d'une opération $P_{field}(A, B)_N = S$, fait appel aux variables suivantes:

- A et B deux entiers codés sur n' bits et décomposés en m' mots de k' bits notés respectivement $A_0$ à $A_{m'-1}$ et $B_0$ à $B_{m'-1}$,
- N un entier impair codé sur n' bits et représenté sur m' mot de k' bits noté $N_0$ à $N_{m'-1}$
- S(i) un entier codé sur (m' * k') bits représentant une valeur actualisée du résultat S pendant une itération i,
- X et Z deux entiers codés sur ((m' + 1) * k') bits,
- $Y_0$ un entier codé sur k' bits
- $J_0$ un entier codé sur k' bits et tel que $((J_0 * N_0) + 1) \bmod 2^{k'} = 0$

L'algorithme mathématique qui est utilisé est le suivant:

- mise à 0 de S(0),
- mise en oeuvre d'une boucle indexée par un indice i, i variant de 1 à m':

  B1: calcul de $X = S(i-1) + (B * A_{i-1})$,
  B2: calcul de $Y = (X * J_0) \bmod 2^{k'}$, où l'opération $\bmod 2^{k'}$ ne correspond qu'à une troncature,
  B3: calcul de $Z = X + (Y * N)$,
  B4: calcul de $S(i) = Z \setminus 2^{k'}$, où le symbole \ représente une division entière, il s'agit en fait d'une troncature de k' bits,
  B5: si S(i) est supérieur à N alors on soustrait N à S(i),

- on peut récupérer le résultat $S = S(m') = P_{field}(A, B)_N = A * B * 2^{-m'*k'} \bmod N$.

Bien entendu, si k' * m' ≤ k * m, on réalisera préférentiellement les opérations $P_{field}$ à l'intérieur du coprocesseur de manière optimum, en prenant k' = k, par exemple comme décrit dans le document D2.

Si par contre, k' * m' > k * m, on réalisera les opérations $P_{field}$ avec le processeur de traitement 2, les multiplications étant faites à l'aide du coprocesseur 1.

Quelque soit la taille k' * m' des opérandes, il est nécessaire de produire un paramètre de correction d'erreur $H = 2^{2*k'*m'} \bmod N$ si l'on désire réaliser une multiplication modulaire, avec A et B de la taille de N. En fait d'autre cas peuvent se présenter suivant le mode de réalisation d'une opération $P_{field}$, si A est codé sur k' * ma bits, B codé sur k' * mb bits et N codé sur k' * m' bits. Il est possible d'avoir des paramètres H de différentes formes qui tiennent compte d'optimisation de la multiplication modulaire. Ainsi on peut avoir $H = 2^{k'*(ma+m')}$, ou $2^{k'*(mb+m')}$, ou $2^{k'*(ma+mb)}$. En fait on se ramène à $H = 2^{k'*(m'+m'')}$ dans tous les cas avec m'' = ma, ou mb, ou ma + mb - m'. Ainsi défini, m" peut être négatif, mais en pratique il est toujours positif.

Dans notre exemple, ce paramètre de correction d'erreur H sert à supprimer l'erreur due à la méthode de Montgomery qui vaut $2^{-m'^{*}k'}$. Pour réaliser une multiplication, on réalise une première opération $P_{field}$ avec les deux opérandes de la multiplication à réaliser, puis on réalise une deuxième opération $P_{field}$ avec le résultat de la première opération $P_{field}$ et le paramètre de correction d'erreur H.

Pour produire le paramètre de correction H lorsque m' * k' ≤ m * k, le document D2 utilise un procédé de soustractions successives qui est réalisable intégralement dans le coprocesseur 1.

Si m' * k' > m * k, alors le calcul de H ne peut plus être réalisé intégralement dans le coprocesseur 1. Si on désire réaliser un procédé utilisant des soustractions successives, celui-ci doit être effectué par le processeur de traitement 2 qui utilisera un programme de calcul. Un tel programme de calcul revient à effectuer m" * k' itérations comportant chacune dans le pire cas de calcul possible: une soustraction sur m' * k' bits, un décalage de un bit sur un mot de m' * k' bits, et une comparaison sur deux mots de m' * k' bits. Ainsi le temps de calcul de H est proportionnel à (m' * k') * (m" * k').

Afin de réduire cette durée pour des opérandes de grandes dimension, l'invention propose un procédé de calcul différent qui est applicable quelque soit la taille des opérandes. Le procédé proposé est particulièrement intéressant pour m' * k' et m" * k' très grand.

Le procédé de l'invention utilise un circuit tel que décrit sur la figure 2. Ce procédé nécessite le codage de m" * k' sur p bits et comprend les étapes suivantes:

- production d'une donnée binaire valant $2^{m'^{*}k'+1}$ mod N, dite H(0) et stockage de cette donnée dans la mémoire 3;
- réalisation d'une boucle indexée par un indice i, i variant de 1 à p - 1, et qui comporte les étapes suivantes:

    -- mise en oeuvre d'une opération $P_{field}$(H(i-1), H(i-1)), et stockage du résultat noté R(i),
    -- si le bit de poids $2^{p-i-1}$ de m" * k' est égal à 1 alors réalisation d'une opération $P_{field}$(H(i-1), H(0)) et stockage du résultat H(i).

La boucle réalisée ci-dessus revient à réaliser une exponentiation modulaire, selon la méthode de Montgomery et sans correction d'erreur, de H(0) par m" * k'. Ainsi la boucle réalise $\log_2(m''^{*}k')$ itérations (le résultat étant tronqué), chaque itération étant proportionnelle à m' * k'. Bien sûr, le coefficient de proportionnalité d'une itération du procédé est plus important que le coefficient de proportionnalité d'une itération de l'art antérieur.

Quelque soit la taille de m' * k', le multiplieur 19 du coprocesseur 1 sera sollicité lors des opérations $P_{field}$. Les résultats R(i) et H(i) peuvent être stockés dans la mémoire 3, mais il est préférable de les stocker dans le registre 10 si m' * k' ≤ m * k .

La donnée binaire H(0) est stockée dans la mémoire 3, toutefois si on utilise ce procédé pour des tailles d'opérandes inférieures à m * k bits on stocke également cette donnée dans le registre 10 du coprocesseur 1.

La production de cette donnée H(0) = $2^{m'^{*}k'+1}$ mod N peut être réalisée différemment suivant les cas qui se présentent.

Si N a son bit de poids fort égal à 1 alors on dispose de deux possibilités pour produire $2^{m'^{*}k'}$ :

- soit on effectue le complément à 2 de N,
- soit on réalise l'opération 0 - N.

Ces deux possibilités sont équivalentes, on préférera toutefois la deuxième possibilités si m' * k' ≤ m * k, l'opération étant câblée sur le coprocesseur 1. Le choix de l'une ou l'autre des possibilités est à faire en fonction soit de la rapidité d'exécution, soit de la simplicité d'implantation suivant les contraintes qu'a l'homme de métier pour la réalisation.

Puis on effectue un décalage à gauche de une unité suivi d'une soustraction de N pour obtenir H(0).

Si q bits de poids fort de N sont à 0, alors on effectuera le calcul de H(0) en se ramenant au cas précédant. C'est à dire en effectuant les opérations suivantes:

- décalage à gauche de q bits de N donnant N', les q bits de poids faible de N' étant égaux à 0;
- production d'une donnée H'(0) par réalisation du complément à 2 de N' (ou par soustraction de N à 0);
- mise en oeuvre d'une boucle indexée par un indice j, j variant de 1 à q, comportant les étapes suivantes:

    -- décalage de 1 bit vers la gauche, le résultat étant appelé H'(j),
    -- si H'(j) est supérieur à N' alors on soustrait N' à H'(j);

- décalage de H'(q) de q bits vers la droite pour obtenir H(0).

Evidement, l'homme de métier comprend que les décalages à gauche correspondent à des multiplications par une puissance de deux. L'homme de métier comprend également que ces décalages à gauches peuvent être fictifs, c'est à dire qu'ils peuvent être réalisés en chargeant des 0 en bit de poids faible à la place de la donnée et décaler ainsi le chargement de la donnée. Il est également possible que la soustraction de N' à H'(j) soit réalisée en série, dans ce cas, le décalage à gauche correspond en fait à un décalage à droite non effectué.

Dans la pratique, lorsque N est codé sur m' * k' bits, il est rare que N ait plus de 3 ou 4 bits de poids fort à 0. Pour m' * k' grand, on estime que le calcul de H(0) est négligeable devant une itération de la boucle du calcul de H utilisant au moins une opération $P_{field}$. Ainsi, on considère que la production de H utilise un temps proportionnel à $\log_2(m'' * k') * (m' * k')$. Il apparait donc évident à l'homme du métier que le calcul de H pour des opérandes codées sur un nombre de bits important est plus rapide que par un procédé utilisant des soustractions successives.

Une amélioration de ce procédé consiste à décomposer $m'' * k'$ en un produit de deux termes $u * v$ afin de réaliser u itérations par soustractions successives et $\log_2(v)$ itérations par exponentiation. On réalise pour cela les étapes suivantes en posant u et v deux entier tels que $u * v = m'' * k'$ et v étant codé sur w bits:

- production d'une donnée binaire valant $2^{m'*k'+u}$ mod N, dite H(0) et stockage de cette donnée;
- réalisation d'une boucle indexée par un indice i, i variant de 1 à w - 1, et qui comporte les étapes suivantes:

    -- mise en oeuvre d'une opération $P_{field}(H(i-1), H(i-1))$, et stockage du résultat noté R(i),
    -- si le bit de poids $2^{w-i-1}$ de la donnée v est égal à 1 alors réalisation d'une opération $P_{field}(H(i-1), H(0))$ et stockage du résultat H(i).

Le calcul de H(0) valant $2^{m'*k'+u}$ mod N est réalisé par les étapes suivantes avec q bits de poids fort de N étant à 0:

- décalage à gauche de q bits de N donnant N', les q bits de poids faible de N' étant égaux à 0;
- production d'une donnée H'(0) par réalisation du complément à 2 de N' (ou par soustraction de N à 0);
- mise en oeuvre d'une boucle indexée par un indice j, j variant de 1 à q + u, comportant les étapes suivantes:

    -- décalage de 1 bit vers la gauche, le résultat étant appelé H'(j),
    -- si H'(j) est supérieur à N' alors on soustrait N' à H'(j);

- décalage de H'(q + u) de q bits vers la droite pour obtenir H(0).

Bien sur par analogie avec le calcul par exponentiation simple, si le bit de poids fort de N est égal à 1 alors les étapes relatives aux q bits de poids fort à 0 sont inutiles.

Toujours par analogie avec le procédé d'exponentiation simple, on peut utiliser pour le stockage des résultats aussi bien la mémoire que le registre 10. De même, toutes les multiplications des opérations $P_{field}$ sont effectuées dans le coprocesseur.

Une telle amélioration réduit de quelques itérations l'exponentiation modulaire au profit de quelques itérations de soustractions successives moins coûteuses en temps d'exécution.

A titre d'exemple numérique, avec les valeurs suivantes: k' = 512 = m * k , m' = m'' = 8 , et q = 0, on a approximativement les résultats suivants en temps:

- par soustraction successive de l'ordre de 16 millions de temps de cycles d'horloge,
- par exponentiation simple de l'ordre de 9 millions de temps de cycles d'horloge,
- par combinaison des deux procédés en prenant u = 8 de l'ordre de 7 millions de temps de cycles d'horloge.

L'homme de métier remarquera qu'il n'est pas toujours intéressant de prendre k' = k * m et pourra à loisir faire varier les différents paramètres qu'il peut choisir sans s'éloigner de l'idée générale de l'invention.

L'invention permet de traiter des nombres de très grande taille sans pour autant augmenter les circuits de traitement. Dans une carte à puce, la taille du circuit intégré est très petite. Néanmoins certaines cartes à puce ont besoin d'une mémoire importante pour différentes fonctions. L'invention peut donc utiliser une mémoire partagée avec d'autre éléments de la carte à puce. La solution apportée par l'invention est donc particulièrement adaptée pour être intégrée sur une carte à puces.

L'invention utilisant une mémoire de taille importante il peut être envisageable que cette mémoire soit également utilisée par d'autres applications.

## Revendications

1. Procédé de production d'un paramètre de correction d'erreur intervenant dans la réalisation de calcul modulaires par des circuits intégrés utilisant la méthode de Mongomery, H étant le paramètre de correction d'erreur tel que $H = 2^{(m+m'')*k}$ mod N, N étant un entier codé sur $m * k$ bits et ayant son bit de poids le plus faible non nul, $m'' * k$ étant codé sur p bits, et H(i) étant une valeur actualisée de H telle que $H(p-1) = H = 2^{(m+m'')*k}$ mod N, le dit procédé utilisant un coprocesseur d'arithmétique modulaire (1), un processeur de traitement (2) et une mémoire (3), le procédé comportant les étapes suivantes:

- production d'une donnée binaire valant $2^{m*k+1}$ mod N, dite H(0) et stockage de cette donnée dans la mémoire (3) et/ou dans un registre (10) du coprocesseur (1);
- réalisation d'une boucle indexée par un indice i, i variant de 1 à p - 1, et qui comporte les étapes suivantes:

    -- mise en oeuvre d'une opération $P_{field}(H(i-1), H(i-1))$ en utlisant un multiplieur (19) du coprocesseur (1), et stockage du résultat noté R(i) dans la mémoire (3) ou dans le registre (10) du coprocesseur (1),

-- si le bit de poids $2^{p-i-1}$ de la donnée m * k est égal à 1 alors réalisation d'une opération $P_{field}$(H(i-1), H(0)) en utlisant un multiplieur (19) du coprocesseur (1), et stockage du résultat H(i) dans la mémoire (3) ou dans le registre (10) du coprocesseur (1).

2. Procédé selon la revendication 1 caractérisé en ce que la production d'une donnée binaire valant $2^{m*k+1}$ mod N comporte les étapes suivantes:

- initialisation d'une donnée, codée sur m * k bits, à 0 dans la mémoire (3) ou dans le registre (10) du coprocesseur (1),
- réalisation d'une soustraction 0 - N dans le processeur de traitement (2) ou dans le coprocesseur (1),
- décalage de ce premier résultat de un bit vers la gauche,
- soustraction de N, dans le processeur de traitement (2) ou dans le coprocesseur (1), à ce résultat décalé si celui-ci est supérieur à N, et
- stockage des m * k bits de poids faible de H(0), dans la mémoire (3) ou dans le registre (10) du coprocesseur (1).

3. Procédé selon la revendication 1 caractérisé en ce que la production d'une donnée binaire valant $2^{m*k+1}$ mod N comporte les étapes suivantes:

- production du complément à 2 de N,
- décalage de ce complément de un bit vers la gauche,
- soustraction de N, dans le processeur de traitement (2) ou dans le coprocesseur (1), à ce complément décalé si celui-ci est supérieur à N, et
- stockage des m * k bits de poids faible de H(0), dans la mémoire (3) ou dans le registre (10) du coprocesseur (1).

4. Procédé selon la revendication 1 caractérisé en ce que la production d'une donnée binaire valant $2^{m*k+1}$ mod N s'effectue ainsi lorsque N a q bits de poids le plus fort à 0:

- initialisation d'une donnée à 0, codée sur m * k bits, dans la mémoire (3) ou dans le registre (10) du coprocesseur (1);
- décalage à gauche de q bits de N donnant N', les q bits de poids faible de n' étant égaux à 0;
- réalisation d'une soustraction 0 - N' dans le processeur de traitement (2) ou dans le coprocesseur (1) et stockage des m * k bits de poids faible dans H'(0);
- mise en oeuvre d'une boucle indexée par un indice j, j variant de 1 à q + 1, comportant les étapes suivantes:

-- décalage de 1 bit vers la gauche, le résultat étant appelé H'(j),
-- si H'(j) est supérieur à N' alors on soustrait N' à H'(j) dans le processeur de traitement (2) ou dans le coprocesseur (1);

- décalage de H'(q + 1) de q bits vers la droite pour obtenir H(0).

5. Procédé selon la revendication 1 caractérisé en ce que la production de la donnée binaire valant $2^{m*k+1}$ mod N s'effectue ainsi lorsque N a q bits de poids le plus fort à 0:

- décalage à gauche de q bits de N donnant N', les q bits de poids faible de n' étant égaux à 0;
- production d'une donnée H'(0) par réalisation du complément à 2 de N';
- mise en oeuvre d'une boucle indexée par un indice j, j variant de 1 à q + 1, comportant les étapes suivantes:

-- décalage de 1 bit vers la gauche, le résultat étant appelé H'(j),
-- si H'(j) est supérieur à N' alors on soustrait N' à H'(j) dans le processeur de traitement (2) ou dans le coprocesseur (1);

- décalage de H'(q + 1) de q bits vers la droite pour obtenir H(0).

6. Procédé de production d'un paramètre de correction d'erreur intervenant dans la réalisation de calcul modulaires par des circuits intégrés utilisant la méthode de Mongomery, H étant le paramètre de correction d'erreur tel que H = $2^{(m+m'')*k}$ mod N, N étant un entier codé sur m * k bits et ayant son bit de poids le plus faible non nul, dans lequel m'' * k = u * v, u et v étant deux entiers, v étant codé sur w bits, et H(i) étant une valeur actualisée de H telle que H(w-1) = H = $2^{(m+m'')*k}$ mod N, le dit procédé utilisant un coprocesseur d'arithmétique modulaire (1), un processeur de traitement (2) et une mémoire (3), le procédé comportant les étapes suivantes:

- production d'une donnée binaire valant $2^{m*k+u}$ mod N, dite H(0) et stockage de cette donnée dans la mémoire (3) et/ou dans un registre (10) du coprocesseur (1);
- réalisation d'une boucle indexée par un indice i, i variant de 1 à w - 1, et qui comporte les étapes suivantes:

-- mise en oeuvre d'une opération $P_{field}$(H(i-1), H(i-1)) en utlisant un multiplieur (19) du coprocesseur (1), et stockage du résultat noté R(i) dans la mémoire (3) ou dans le registre (10) du coprocesseur (1),

-- si le bit de poids $2^{w-i-1}$ de la donnée v est égal à 1 alors réalisation d'une opération $P_{field}$(H(i-1), H(0)) en utlisant un multiplieur (19) du coprocesseur (1), et stockage du résultat H(i) dans la mémoire (3) ou dans le registre (10) du coprocesseur (1).

7. Procédé selon la revendication 6 caractérisé en ce que la production de la donnée binaire dite H(0) comporte les étapes suivantes, N' étant égal à N:

- production d'une donnée H'(0) par réalisation du complément à 2 de N' ou par soustraction de N à 0 dans le processeur (2) ou le coprocesseur (1);

- mise en oeuvre d'une boucle indexée par un indice j, j variant de 1 à u, comportant les étapes suivantes:

-- décalage de 1 bit vers la gauche, le résultat étant appelé H'(j),

-- si H'(j) est supérieur à N' alors on soustrait N' à H'(j);

8. Procédé selon la revendication 7 caractérisé en ce que il existe q bits de poids fort de N qui sont égaux à 0, et en ce que l'on ajoute les étapes suivantes à la production de la donnée binaire H(0) parmi les étapes déjà existantes:

- décalage à gauche de q bits de N donnant N', les q bits de poids faible de N' étant égaux à 0;

- mise en oeuvre d'une boucle indexée par un indice j, j variant de 1 à q, comportant les étapes suivantes:

-- décalage de 1 bit vers la gauche, le résultat étant appelé H'(j + u),

-- si H'(j + u) est supérieur à N' alors on soustrait N' à H'(j) dans le processeur (2) ou dans le coprocesseur (1);

- décalage de H'(q + u) de q bits vers la droite pour obtenir H(0).

**Patentansprüche**

1. Verfahren zur Erzeugung eines Fehlerkorrekturparameters, das in die Durchführung von Modulo-Berechnungen durch integrierte Schaltkreise unter Verwendung des Montgomery-Verfahrens eingreift, wobei H der Fehlerkorrekturparameter wie H = $2^{(m+m'')\cdot k}$ mod N ist und N eine ganze Zahl ist, die in m k Bits kodiert ist und ihr Bit mit dem niedrigsten Gewicht nicht Null hat, m'' · k kodiert ist in p Bits und H(i) ein aktualisierter Wert von H wie H(p-1) = H = $2^{(m+m'')\cdot k}$ mod N ist, wobei das Verfahren einen modulo-arithmetischen Coprozessor (1), einen Verarbeitungsprozessor (2) und einen Speicher (3) verwendet, wobei das Verfahren die folgenden Schritte aufweist:

- Erzeugen einer binären Dateneinheit mit dem Wert $2^{m\cdot k+1}$ mod N, genannt H(0), und Abspeichern dieser Dateneinheit in dem Speicher (3) und/oder in einem Register (10) des Coprozessors (1);

- Abarbeiten einer Schleife, die mit einem Index i indiziert ist, wobei i zwischen 1 und p - 1 liegt, und die die folgenden Schritte umfaßt:

-- Abarbeiten einer Operation $P_{field}$(H(i-1), H(i-1)) unter Verwendung eines Multiplizierers (19) des Coprozessors (1) und Abspeichern des R(i) genannten Ergebnisses in dem Speicher (3) oder in dem Register (10) des Coprozessors (1),

-- wenn das Bit mit dem Gewicht $2^{p-i-1}$ der Dateneinheit m · k gleich 1 ist, dann Durchführen einer Operation $P_{field}$(H(i-1), H(0)) unter Verwendung eines Multiplizierers (19) des Coprozessors (1) und Abspeichern des Ergebnisses H(i) in dem Speicher (3) oder in dem Register (10) des Coprozessors (1).

2. Verfahren nach Anspruch 1, dadurch gekennzeichnet, daß das Erzeugen einer binären Dateneinheit mit dem Wert $2^{m\cdot k+1}$ mod N die folgenden Schritte umfaßt:

- Initialisierung einer Dateneinheit, die in m · k Bits kodiert ist, auf 0 in dem Speicher (3) oder in dem Register (10) des Coprozessors (1),

- Durchführen einer Subtraktion 0 - N in dem Verarbeitungsprozessor (2) oder in dem Coprozessor (1),

- Verschieben dieses ersten Resultats um ein Bit nach links,

- Subtraktion von N in dem Verarbeitungsprozessor (2) oder dem Coprozessor (1) von diesem verschobenen Ergebnis, wenn dieses größer als N ist, und

- Abspeichern von m · k Bits niedrigen Gewichts von H(0) in dem Speicher (3) oder in dem Register (10) des Coprozessors (1).

3. Verfahren nach Anspruch 1, dadurch gekennzeichnet, daß das Erzeugen einer binären Dateneinheit mit dem Wert $2^{m\cdot k+1}$ mod N die folgenden Schritte umfaßt:

- Erzeugen des 2-Komplements von N,

- Verschieben dieses Komplements um ein Bit nach links,
- Subtraktion von N in dem Verarbeitungsprozessor (2) oder in dem Coprozessor (1) von diesem verschobenen Komplement, wenn dieses größer als N ist, und
- Abspeichern von m · k Bits niedrigen Gewichts von H(0) in dem Speicher (3) oder in dem Register (10) des Coprozessors (1).

4. Verfahren nach Anspruch 1, dadurch gekennzeichnet, daß das Erzeugen einer binären Dateneinheit mit dem Wert $2^{m \cdot k+1}$ mod N erfolgt, wenn N q Bits mit dem höchsten Gewicht auf 0 hat:

- Initialisieren einer Dateneinheit auf 0, kodiert in m · k Bits, in dem Speicher (3) oder in dem Register (10) des Coprozessors (1);
- Verschieben von N um q Bits nach links, wodurch sich N' ergibt, wobei die q Bits des niedrigen Gewichts nicht 0 sind;
- Ausführen einer Subtraktion 0 - N' in dem Verarbeitungsprozessor (2) oder in dem Coprozessor (1) und Abspeichern von m · k Bits niedrigen Gewichts in H'(0);
- Abarbeiten einer Schleife, die mit einem Index j indiziert ist, wobei j zwischen 1 und q + 1 liegt, die die folgenden Schritte umfaßt:

  -- Verschieben um 1 Bit nach links, wobei das Ergebnis H'(j) genannt wird,
  -- wenn H'(j) größer als N' ist, dann wird N' von H'(j) in dem Verarbeitungsprozessor (2) oder in dem Coprozessor (1) abgezogen;

- Verschieben von H'(q + 1) um q Bits nach rechts, um H(0) zu erhalten.

5. Verfahren nach Anspruch 1, dadurch gekennzeichnet, daß das Erzeugen der binären Dateneinheit mit dem Wert $2^{m \cdot k+1}$ mod N erfolgt, wenn N q Bits mit dem höchsten Gewicht auf 0 hat:

- Verschieben von N um q Bits nach links, wodurch sich N' ergibt, wobei die q Bits mit niedrigstem Gewicht nicht gleich 0 sind;
- Erzeugen einer Dateneinheit H'(0) durch Berechnen des 2-Komplements von N';
- Abarbeiten einer Schleife, die mit einem Index j indiziert ist, wobei j zwischen und q + 1 liegt, die die folgenden Schritte umfaßt:

  -- Verschieben um 1 Bit nach links, wobei das Ergebnis H'(j) genannt wird,
  -- wenn H'(j) größer als N' ist, dann wird N' von H'(j) in dem Verarbeitungsprozessor (2) oder in dem Coprozessor (1) abgezogen;

- Verschieben von H'(q + 1) um q Bits nach rechts, um H(0) zu erhalten.

6. Verfahren zum Erzeugen eines Fehlerkorrekturparameters, das in die Durchführung von Modulo-Berechnungen durch integrierte Schaltkreise unter Verwendung des Montgomery-Verfahrens eingreift, wobei H der Fehlerkorrekturparameter wie H = $2^{(m+m'') \cdot k}$ mod N ist, wobei N eine ganze Zahl ist, die in m k Bits kodiert ist und deren Bit mit dem niedrigsten Gewicht nicht Null ist, bei welchem m" · k = u · v ist und u und v zwei ganze Zahlen sind, wobei v in w Bits kodiert ist und H(i) ein aktualisierter Wert von H wie H(w-1) = H = $2^{(m+m'') \cdot k}$ mod N ist, wobei das Verfahren einen modulo-arithmetischen Coprozessor (1), einen Verarbeitungsprozessor (2) und einen Speicher (3) verwendet, wobei das Verfahren die folgenden Schritte umfaßt:

- Erzeugen einer binären Dateneinheit mit dem Wert $2^{m \cdot k+u}$ mod N, genannt H(0), und Abspeichern dieser Dateneinheit in dem Speicher (3) und/oder in einem Register (10) des Coprozessors (1);
- Abarbeiten einer Schleife, die mit einem Index i indiziert ist, wobei i zwischen 1 und w - 1 liegt, und die die folgenden Schritte umfaßt:

  -- Abarbeiten einer Operation $P_{field}$(H(i-1), H(i-1)) unter Verwendung eines Multiplizierers (19) des Coprozessors (1) und Abspeichern des R(i) genannten Ergebnisses in dem Speicher (3) oder in dem Register (10) des Coprozessors (1),
  -- wenn das Bit mit dem Gewicht $2^{w-i-1}$ der Dateneinheit v gleich 1 ist, dann Ausführung einer Operation $P_{field}$(H(i-1), H(0)) unter Verwendung eines Multiplizierers (19) des Coprozessors (1) und Abspeichern des Ergebnisses H(i) in dem Speicher (3) oder in dem Register (10) des Coprozessors (1).

7. Verfahren nach Anspruch 6, dadurch gekennzeichnet, daß das Erzeugen der binären Dateneinheit H(0) die folgenden Schritte umfaßt, wobei N' gleich N ist:

- Erzeugen einer Dateneinheit N'(0) durch Bestimmen des 2-Komplements von N' oder durch Subtraktion von N von 0 in dem Prozessor (2) oder dem Coprozessor (1);
- Abarbeiten einer Schleife, die mit einem Index j indiziert ist, wobei j zwischen 1 und u liegt, die die folgenden Schritte umfaßt:

-- Verschieben um 1 Bit nach links, wobei das Ergebnis H'(j) genannt wird,
-- wenn H'(j) größer als N' ist, dann Subtraktion von N' von H'(j).

8. Verfahren nach Anspruch 7, dadurch gekennzeichnet, daß q Bits mit hohem Gewicht von N existieren, die nicht gleich 0 sind, und dadurch daß man die folgenden Schritte bei dem Erzeugen der binären Dateneinheit H(0) zu den bereits existierenden Schritten hinzufügt:

- Verschieben von N um q Bits nach links, wodurch sich N' ergibt, wobei die q Bits mit dem niedrigsten Gewicht von N' gleich 0 sind;
- Abarbeiten einer Schleife, die mit einem Index j indiziert ist, wobei j zwischen 1 und q liegt, die die folgenden Schritte umfaßt:

  -- Verschieben um 1 Bit nach links, wobei das Ergebnis H'(j + u) genannt wird,
  -- wenn H'(j + u) größer als N' ist, dann Subtraktion von N' von H'(j) in dem Prozessor (2) oder in dem Coprozessor (1);

- Verschieben von H'(q + u) um q Bits nach rechts, um H(0) zu erhalten.

## Claims

1. A method for producing an error correction parameter intervening in the execution of modular computations by integrated circuits using the Montgomery method, H being the error correction parameter such that $H = 2^{(m+m'')*k} \bmod N$, N being an integer coded over m * k bits and having its lowest-order bit not zero, m" * k being coded over p bits, and H(i) being an updated value of H such that $H(p-1) = H = 2^{(m+m'')*k} \bmod N$, the said method using a modular arithmetic coprocessor (1), a processor (2) and a memory (3), the method including the following steps:

- production of a binary data element worth $2^{m*k+1} \bmod N$, called H(0) and storage of this data element in the memory (3) and/or in a register (10) of the coprocessor (1);
- production of a loop indexed by an index i, i varying from 1 to p - 1, and which includes the following steps:

  -- implementation of an operation $P_{field}$(H(i-1), H(i-1)) by using a multiplier (19) of the coprocessor (1), and storage of the result marked R(i) in the memory (3) or in the register (10) of the coprocessor (1),
  -- if the bit of order $2^{p-i-1}$ of the data element m * k is equal to 1 then production of an operation $P_{field}$(H(i-1), H(0)) by using a multiplexer (19) of the coprocessor (1), and storage of the result H(i) in the memory (3) or in the register (10) of the coprocessor (1).

2. A method according to Claim 1, **characterised in that** the production of a binary data element worth $2^{m*k+1} \bmod N$ comprises the following steps:

- initialisation of a data element, coded over M * k bits, at 0 in the memory (3) or in the register (10) of the coprocessor (1),
- performance of a subtraction 0 - N in the processor (2) or in the coprocessor (1),
- shift of this first result by one bit to the left,
- subtraction of N, in the processor (2) or in the coprocessor (1), to this shifted result if it is greater than N, and
- storage of the m * k low-order bits of H(0), in the memory (3) or in the register (10) of the coprocessor (1).

3. A method according to Claim 1, **characterised in that** the production of a binary data element worth $2^{m+k+1} \bmod N$ comprises the following steps:

- production of the complement to 2 of N,
- shift of this complement by one bit to the left,
- subtraction of N, in the processor (2) or in the coprocessor (1), to this shifted complement if it is greater than N, and
- storage of m * k low-order bits of H(0), in the memory (3) or in the register (10) of the coprocessor (1).

4. A method according to Claim 1, **characterised in that** the production of a binary data element worth $2^{m*k+1} \bmod N$ is performed thus when N has q highest-order bits at 0:

- initialisation of a data element at 0, coded over m * k bits, in the memory (3) of in the register of the coprocessor (1);
- left shift by q bits of N giving N', the q low-order bits of n' being equal to 0;
- performance of a subtraction 0 - N' in the processor (2) or in the coprocessor (1) and storage of m * k low-order bits in H'(0);
- production of a loop indexed by an index j, j varying from 1 to q + 1, comprising the following steps:

  -- shift by 1 bit to the left, the result being called H'(j),

-- if H'(j) is greater than N' then H' to $H^4$(j) is subtracted in the processor (2) or in the coprocessor (1);

- shift by H'(q+1) of q bits to the right to obtain H(0).

5. A method according to Claim 1,
   **characterised in that** the production of the binary data element worth $2^{m*k+1}$ mod N is performed thus when N has q highest-order bits at 0:

   - left shift of q bits of N giving N', the q low-order bits of n' being equal to 0'
   - production of a data element H'(0) by production of the complement to 2 of N';
   - utilisation of a loop indexed by a index j, j varying from 1 to q + 1, comprising the following steps:

     -- shift of 1 bit to the left, the result being called H'(j),
     -- if H'(j) is greater than N' then N' to H'(j) is subtracted in the processor (2) or in the coprocessor (1)'

   - shift of H' (q + 1) of q bits to the right to obtain H(0).

6. A method for producing an error correction parameter intervening in the execution of modular computations by integrated circuits using the Montgomery method, H being the error correction parameter such that H = $2^{(m+m'')*k}$ mod N, N being an integer coded over m * k bits and having its lowest-order bit not zero, in which m" * k = u * v, u and v being two integers, v being coded over w bits, and H(i) being an updated value of H such that H(w-1) = H = $2^{(m+m'')*k}$ mod N, the said method using a modular arithmetic coprocessor (1), a processor (2) and a memory (3), the method comprising the following steps:

   - production of binary data element worth $2^{m*k+u}$ mod N, called H(0) and storage of this data element in the memory (3) and/or in a register (10) of the coprocessor (1);
   - production of a loop indexed by an index i, i varying from 1 to w - 1, and which comprises the following steps:

     -- utilisation of an operation $P_{field}$(H(i-1), H(i-1)) by using a multiplexer (19) of the coprocessor (1), and storage of the result marked R(1) in the memory (3) or in the register (10) of the coprocessor (1),
     -- if the bit of order $2^{w-i-1}$ of the data element v is equal to 1 then execution of an operation $P_{field}$(H(i-1), H(0)) by using a multiplexer (19) of the coprocessor (1), and storage of the result H(i) in the memory (3) or in the register (10) of the coprocessor (1).

7. A method according to Claim 6,
   **characterised in that** the production of the binary data element called H(0) comprises the following steps, N' being equal to N:

   - production of a data element H'(0) by production of the complement at 2 of N' or by subtraction of N at 0 in the processor (2) or the coprocessor (1);
   - utilisation of a loop indexed by an index j, j varying from 1 to u, comprising the following steps:

     -- shift of 1 bit to the left, the result being called H'(j),
     -- if H'(j) is greater than N', then N' is subtracted;

8. A method according to Claim 7,
   **characterised in that** there are q high-order bits of N which are equal to 0,
   **and in that** the following steps are added to the production of the binary data element H(0) from the already existing steps:

   - left shift by q bits of N giving N', the q low-order bits of N' being equal to 0;
   - production of a loop indexed by an index j, j varying from 1 to q, comprising the following steps:

     -- shift by one bit to the left, the result being called H'(j+u),
     -- if H'(j + u) is greater than N', then N' to H' (j) is subtracted in the processor (2) or in the coprocessor (1);

   - shift by H'(q + u) of q bits to the right to obtain H(0).

## FIG_1

EP 0 785 503 B1

Message clair

**FIG_2**

Message crypté